# EUROPEAN PATENT SPECIFICATION

(11) **EP 3 769 355 B1**
(45) Date of publication and mention of the grant of the patent: **14.06.2023**
(21) Application number: 19722660.8
(22) Date of filing: 13.03.2019
(51) Int. Cl.: H01M 50/403, H01M 50/434, H01M 50/548, H01M 50/55, C04B 28/00, H01M 10/04, H01M 10/36, C04B 12/00, H01M 50/553, H01M 50/559, C04B 111/00, C04B 111/10

(54) **VOLTAGE SOURCE WITH AN ELECTROLYTE CONTAINING ALUMINIUM AND SILICON OXIDES, AND METHOD FOR MANUFACTURING THE VOLTAGE SOURCE**
SPANNUNGSQUELLE MIT EINEM ELEKTROLYTEN, DER ALUMINIUM- UND SILIZIUMOXIDE ENTHÄLT, UND VERFAHREN ZUR HERSTELLUNG DER SPANNUNGSQUELLE
SOURCE DE TENSION AVEC UN ÉLECTROLYTE CONTENANT DES OXYDES D'ALUMINIUM ET DE SILICIUM, ET PROCÉDÉ DE FABRICATION DE LA SOURCE DE TENSION

(30) Priority: 20.03.2018 FI 20185262
(43) Date of publication of application: 27.01.2021
(73) Proprietor: Betolar OY, 43300 Kannonkoski (FI)
(72) Inventor: LEPPÄNEN, Juha, 43300 Kannonkoski (FI); PIISPANEN, Mirja, 91410 Jokirinne (FI)
(74) Representative: Papula Oy
(86) International application number: PCT/FI2019/050216
(87) International publication number: WO 2019/180312

(56) References cited:
- Niall Holmes ET AL: "First steps in developing cement-based batteries to power cathodic protection of embedded steel in concrete", Journal of Sustainable Design and Applied Research, 1 January 2015 (2015-01-01), XP055590294, DOI: 10.21427/D7H32N Retrieved from the Internet: URL:https://arrow.dit.ie/cgi/viewcontent.c gi?article=1057&context=engschcivart
- SAKONWAN HANJITSUWAN ET AL: "Electrical conductivity and dielectric property of fly ash geopolymer pastes", INTERNATIONAL JOURNAL OF MINERALS, METALLURGY AND MATERIALS, vol. 18, no. 1, 1 February 2011 (2011-02-01), pages 94-99, XP055597257, CN ISSN: 1674-4799, DOI: 10.1007/s12613-011-0406-0
- Luping Tang: "Rechargeable cement-based concrete batteries", , 3 November 2017 (2017-11-03), pages 1-1, XP055597671, Retrieved from the Internet: URL:https://www.chalmers.se/en/projects/Pa ges/Rechargeable-cement-based-concrete-bat teries.aspx [retrieved on 2019-06-18]
- ABD ALLAH R. ABD EL-MOATEY ET AL: "Improve the Formation of Geopolymer Concrete Mixed with Seawater and Without Curing", AMERICAN JOURNAL OF CIVIL ENGINEERING, vol. 5, no. 6, 30 October 2017 (2017-10-30), pages 344-351, XP055598064, ISSN: 2330-8729, DOI: 10.11648/j.ajce.20170506.15
- Sebastian Ross ET AL: "Lithium conductivity in glasses of the Li2O?Al2O3?SiO2 system", PHYSICAL CHEMISTRY CHEMICAL PHYSICS, vol. 17, no. 1, 3 November 2014 (2014-11-03), pages 465-474, XP055667495, ISSN: 1463-9076, DOI: 10.1039/C4CP03609C

## Description

### TECHNICAL FIELD

The present description relates to infrastructure. Specifically, the description relates to ways of using large voltage sources as a part of built environment.

### BACKGROUND

Concrete is a very common building material, but there are also problems in its use. Sand that could be used for concrete is beginning to run out globally, while also water with sufficiently low salinity needed for concrete may be a scarce good in some parts of the world. In the manufacture of Portland cement, large amounts carbon dioxide are released, which speeds up the climate change. Concrete is also rather limited as a building material, i.e. it may not be utilized for much more than to provide structural strength.

### SUMMARY

An objective of the present invention is to propose an alternative for concrete that will provide sufficient structural strength without the downsides of concrete. Another objective of the invention is to disclose a new way to generate and/or store electricity.

In this context, the document "First steps in developing cement-based batteries to power cathodic protection of embedded steel in concrete" published on the Journal of Sustainable Design and Applied Research on 01.01.2015 by N. Holmes et al. discloses a battery with two terminals, aluminium for the anode and copper for the cathode which are embedded in a Portland cement based electrolyte.

The internet contribution "Rechargeable cement-based concrete batteries" published on 03.11.2017 by Luping Tang, see also https://www.chalmers.se/en/projects/Pages/Rechargeable-cement-based-concrete-batteries.aspx, anticipates the use of cement-based batteries for making buildings able to store e.g. solar energy and provide energy in case of emergency.

The objectives of the invention are achieved by using a mixture which is hardenable to a solid form and in which the main components are aluminium and silicon oxides, and electrically conductive terminals arranged in contact with the mixture. A structural element obtained this way is, on the one hand, a voltage source forming a secondary battery, but on the other hand it may also be a part of built environment.

The voltage source of the present invention is defined in claim 1.

The invention also relates to a method as defined in claim 4.

The dependent claims disclose preferred embodiments of the invention.

### LIST OF FIGURES

The invention and its embodiments will now be described in more detail with reference to the accompanying figures, in which
Fig. 1 illustrates the principle of a simple voltage source,
Fig. 2 shows one voltage source manufactured as a prototype,
Fig. 3 shows one voltage source manufactured as a prototype,
Fig. 4 shows one voltage source manufactured as a prototype,
Fig. 5 illustrates one method, and
Fig. 6 illustrates one voltage source that is also a part of built environment.

Like parts are indicated with the same reference numerals in the figures.

### DETAILED DESCRIPTION

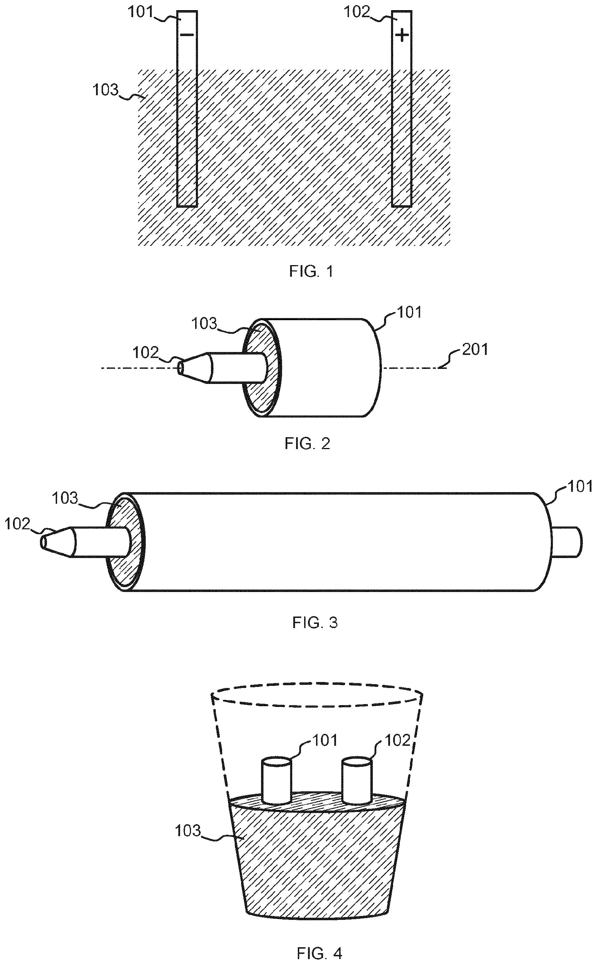

Fig. 1 shows a voltage source including a first terminal 101 and a second terminal 102 with an electrolyte 103 between them. Terminals 101 and 102 are made from a material having good electrical conductivity such as metal or carbon. The electrolyte 103 is a mixture in which the main components are aluminium and silicon oxides. By main component it is meant that the combined proportion of said aluminium and silicon oxides, in percent by weight, in the electrolyte 103 is greater than the proportion of any other component used for its manufacture. Terminals 101 and 102 and the electrolyte 103 jointly form an electrochemical cell that may be used, under some conditions, either as a primary battery or as a secondary battery, i.e. a rechargeable battery. These conditions will be discussed in more detail below.

Below the composition and manufacture of the electrolyte 103 will first be described. In the context of this description the term "binder composition" may mean a composition that is suited for manufacturing the hardenable electrolyte mixture or paste, particularly when mixed together with an aggregate and optionally a solvent such as water or an aqueous solution.

The binder composition may comprise SiO₂ and Al₂O₃, optionally in a mixture with one or more other components. The components of the binder composition, such as SiO₂ and Al₂O₃, may react and harden, and during hardening bind to the aggregate, whereby a hardened material is formed.

The binder composition may be cementitious. It may be used in the same way as traditional cement, or it may be used to replace traditional cement (e.g. Portland cement) at least in part in concrete or mortar mixes.

The binder compositions described herein may have a low carbon footprint, and their manufacture may require a relatively low amount of energy, particularly compared to traditional cement. Hardened materials and products obtained by using the binder compositions may withstand salts and/or high temperatures relatively well during their manufacture, and even during their entire lifetime.

Without being bound by any theory, it is possible that SiO₂ and Al₂O₃ in the binder composition may react with each other when they are present in the hardenable mixture, and form polymer chains or structures resembling polymer chains. These structures may be created e.g. when the binder composition contains ash recovered from a power plant or an incineration plant, which may be bottom or fly ash. However, in some embodiments, silicon-oxygen-silicon bonds and/or silicon-oxygen-aluminium bonds may additionally or instead be created. In embodiments where the hardenable mixture contains a solvent which is an aqueous solution including salts, such as an aqueous solution containing sodium chloride, or for instance seawater, sodium and/or chlorides or other salts may also participate in the reaction and/or be present in the structure. In embodiments where the binder composition contains ash that includes calcium, calcination may also take place.

Traditional Portland cement is considered to undergo a hydration reaction with water. However, the binder composition according to one or more embodiments described in this disclosure does not necessarily require the presence of water to provide the reaction and subsequent hardening; water or other suitable solvent may nevertheless facilitate the starting of the reaction. Water or other suitable solvent may also be mixed in the hardenable mixture to obtain a pastelike or a mass-like hardenable mixture that is suitable for casting. It has further been observed that the hardenable mixture may harden even under conditions where additional activator is not added and/or when the pH of the hardenable mixture is not strongly alkaline. For example an alkaline activator, such as an alkaline hydroxide component, does not necessarily need to be added. Therefore the need to additionally use an activator, such as a strongly alkaline hydroxide activator, may be reduced, or the need for an activator may even be avoided altogether, which may render processing and manufacture of the binder composition and the hardenable mixture much simpler and safer, and also reduce costs. Thus, in some embodiments there is no additional activator present in the binder composition and/or the hardenable mixture.

In the binder composition the weight ratio SiO₂:Al₂O₃ may be about 10:1 - about 1:2. Increasing the relative amount of SiO₂ may increase the compression strength of the hardened material obtained by means of the binder composition. Increasing the relative amount of Al₂O₃ may, on the other hand, increase the tensile strength and/or thermal resistance of the hardened material obtained by means of the binder composition. In a well-suited binder composition the weight ratio SiO₂:Al₂O₃ may be for example about 5:1 - about 1:1 or about 4:1 - about 2:1.

The compression strength of the material or product obtained by hardening the hardenable mixture may be measured e.g. in MPas. The compression strength may be measured e.g. according to standards EN 12350-1, EN 12390-2 and/or EN 12390-3.

Various starting materials may be used for manufacturing the binder composition. For example, the binder composition may comprise substantially pure SiO₂ and substantially pure Al₂O₃ as a mixture in a desired weight ratio. Substantially pure SiO₂ may comprise at least 90 weight-%, or at least 95 weight-% SiO₂. Substantially pure Al₂O₃ may comprise at least 90 weight-%, or at least 95 weight-% Al₂O₃. However, various industrial by-products and/or recycled materials may additionally or alternatively be used. Such industrial by-products and/or recycled materials may comprise SiO₂ and/or Al₂O₃. If desired, they may be processed, fractionated, and/or blended before forming the binder composition to provide the binder composition as intended.

To ensure that SiO₂ reacts with Al₂O₃, it may be included in the binder composition at least partly in a reactive form. At least part of the silicon in the binder composition may be in a reactive form. In one embodiment the material comprising silicon or SiO₂ is at least partly in the form of particles having a substantially spherical structure. This type of silicon is obtained for example by separating silicon containing particles from coal bottom ash or other suitable material and by grinding the silicon containing particles to a desired particle size e.g. by a pin mill or by jet pulverization. So-called reactive silicon can be generated for example by heating blast furnace slag, i.a., to 1100 degrees. In one embodiment, SiO₂ or the whole binder composition may be in the form of particles, the particle diameter of the particles being less than or equal to about 20 µm. In one embodiment the particle diameter of the particles may be 1 - 20 µm. In such particles, silicon may be in a reactive form. When silicon is in a reactive form, the hardening reaction can be efficiently initiated.

The binder composition may comprise at least one material containing SiO₂ and/or Al₂O₃ selected from the following: SiO₂, Al₂O₃, ash, fly ash, slag, SiO₂ containing mineral, Al₂O₃ containing mineral, tailings, side-stream material from a chemical pulping process, boiler bed sand, coal bottom ash, red mud (bauxite), and all of their mixtures and combinations.

The ash may be ash that is obtainable by burning or combustion of coal, biomass (for example wood-based biomass) and/or waste, for example municipal waste. The ash may comprise SiO₂ and/or Al₂O₃.

The fly ash may be obtainable by combustion of coal, biomass (for example wood-based biomass) or oil shale and/or waste, for example municipal waste. The fly ash may comprise SiO₂ and/or Al₂O₃. In embodiments where the binder composition comprises fly ash, it may comprise for example at least 40 weight-%, or at least 50 weight-%, or at least 60 weight-%, or at least 70 weight-%, or at least 80 weight-% fly ash or a fraction/fractions obtainable from fly ash.

The slag may be slag obtainable as a byproduct from the manufacture of iron or steel. The slag may for example comprise or be ground-granulated blast-furnace slag (GGBS). GGBS slag may be obtained e.g. by quenching the molten iron slag from a blast furnace in water or steam. Such slag may be obtainable as a glassy, granular product that may be dried or ground or otherwise comminuted. The slag may comprise SiO₂ and/or Al₂O₃.

The SiO₂ containing mineral and/or the Al₂O₃ containing mineral, or in some embodiments SiO₂ and Al₂O₃ containing mineral, may comprise or be for example the following: belite, alite, clinker, calcium silicate, or all of their mixtures or combinations. However, it may be desirable to use a mineral not containing large amounts of CaO.

The tailings may comprise or be materials left over from a process of separating a valuable fraction from ore gangue. The tailings may comprise SiO₂ and/or Al₂O₃.

The side-stream material from a chemical pulping process may be e.g. green liquor dregs.

The coal bottom ash may be understood as ash formed on the bottom of a coal-fired furnace. The coal bottom ash may comprise SiO₂ and/or Al₂O₃. SiO₂ may also be separated or concentrated from it.

The at least one material containing SiO₂ and/or Al₂O₃ or any of its mixtures or combinations may be comminuted. It may for example be comminuted by at least one of the following methods: grinding, milling (for example by a pin mill or by jet pulverization), crushing or cutting. By means of comminution, particles with a desired particle size or a desired particle size distribution may be obtained. Alternatively or additionally, at least one material containing SiO₂ and/or Al₂O₃ may be fractionated into two or more fractions, for example on the basis of particle size, e.g. by sieving. The particles may be for example separated or concentrated into a SiO₂ enriched fraction and/or another Al₂O₃ enriched fraction. Such fractions, or generally two or more materials may then be mixed in proportions giving a desired weight ratio SiO₂:Al₂O₃, or otherwise a desired composition for the binder.

The binder composition may also comprise other components or admixtures, for example an accelerator, a retarder, an air entraining agent, a defoamer, a plasticizer, a pigment, a corrosion inhibitor, a bonding agent, a pumping aid or any of their mixtures or combinations.

The raw material or raw materials of the binder composition may be selected to provide a desired composition. If necessary, one or more secondary raw materials may be used. A person skilled in the art is able to select the suitable raw materials and secondary raw materials, if they are used, to provide a suitable composition.

The binder composition may comprise at most about 40 weight-% clinker. The clinker may refer to Portland clinker. Minimizing the amount of clinker and/or CaO in the binder composition may be desirable for example to reduce the carbon footprint in the manufacture of the binder composition. Further, the presence of CaO in the binder composition is typically not necessary for obtaining the hardenable mixture. In one embodiment the binder composition comprises at most about 30 weight-%, or at most about 25 weight-%, or at most about 20 weight-%, or at most about 15 weight-%, or at most about 10 weight-% clinker.

In the context of this description the term "weight-%" may be understood as a percentage by weight of the total dry weight, for example the total dry weight of the binder composition.

The binder composition may comprise at most about 40 weight-% CaO. In one embodiment the binder composition comprises at most about 30 weight-%, or at most about 25 weight-%, or at most about 20 weight-%, or at most about 15 weight-%, or at most about 10 weight-% CaO.

SiO₂ and Al₂O₃ may form at least about 40 weight-% of the binder composition. In other words, at least about 40 weight-% of the binder composition may consist of SiO₂ and Al₂O₃ present in the composition. In one embodiment, SiO₂ and Al₂O₃ may form at least about 50 weight-%, or at least about 60 weight-%, or at least about 70 weight-%, or at least about 80 weight-%, or at least about 90 weight-%, or at least about 95 weight-% of the binder composition. The binder composition may also consist of SiO₂ and Al₂O₃.

SiO₂ and/or Al₂O₃ or the whole binder composition may be in the form of particles, the particle diameter of the particles being less than or equal to about 20 µm. In one embodiment the particle diameter of the particles may be 1 - 20 µm.

SiO₂ and/or Al₂O₃ or the whole binder composition may be in the form of particles, the average particle diameter of the particles being at most about 20 pm, or at most about 15 µm. In such particles, silicon may be in a reactive form.

Minimizing the amount of carbon in the binder composition may be desirable. Without being bound by any theory, carbon may interfere with the reactions between SiO₂ and Al₂O₃. For example, the binder composition may comprise at most about 3 weight-%, or at most about 1 weight-% carbon. The amount of carbon in the binder composition may be determined for example by determining its loss on ignition. If necessary, carbon may be removed from the materials of the binder composition.

The description also relates to a hardenable mixture comprising the binder composition according to one or more embodiments described in this disclosure. The binder composition may be provided as a mixture with an aggregate and optionally a solvent in the hardenable mixture.

The hardenable mixture may be a hardenable paste, particularly when it contains a solvent in a mixture with the binder composition and an aggregate. It may be for example a cementitious hardenable mixture or paste, such as a cementitious hardenable concrete mixture or paste.

The hardenable mixture may be a concrete mixture, a mortar mixture, or a plaster mixture. It may also be a concrete-type mixture, for example a polymer concrete mixture.

The hardenable mixture may be a dry mixture, for example a dry concrete mix or other dry product. E.g. a solvent may be added in a desired proportion to this type of dry mixture before hardening.

The aggregate may be any suitable aggregate of bulking material. The aggregate may for example comprise or be at least one of the following: sand, gravel, angular rock, crushed stone, filler, slag, artificial (man-made) aggregate or all of their mixtures or combinations. The aggregate may be fine, coarse, or any of their mixtures or combinations. The aggregate and its coarseness may be selected e.g. based on the purpose of use of the hardenable mixture, the specific composition of the binder composition, the hardening conditions of the hardenable mixture, etc.

The solvent may comprise or be for example water, an aqueous solution containing one or more salts, or any of their mixtures or combinations. The hardenable mixture is not necessarily particularly sensitive to the presence of salts, unlike e.g. traditional concrete. For example salt water, such as seawater, may be used as the solution. The salt content of the aqueous solution containing one or more salts may be at least 0.5 ppt (salt content corresponding to brackish water), or at least 10 ppt, or at least 30 ppt (salt content corresponding to saline water). The salt content of the aqueous solution containing one or more salts may be at most or at least 10 %. However, the salt content is not specifically limited, but the aqueous solution may in some embodiments be even saturated or close to saturation in terms of salt or salts.

The salts are not specifically limited - they may include chlorides such as NaCl, KCl, MgCl₂ and CaCl₂, sulphates such as MgSO4·7H₂O, CuSO4·5H₂O, ZnSO4·7H₂O and FeSO4·7H₂O, NaH₂PO4, KH₂PO4 and other soluble phosphate, hydrogen phosphate and dihydrogen phosphate salts, bicarbonates such as NaHCO₃, nitrates such as Ca(NO₃)₂ and Fe(NO₃)₃·9H₂O, ammonium salts such as NH4Cl, citrates such as sodium citrate, acetates, etc.

The hardenable mixture may also comprise for example fibre, such as steel fibre, aramid fibre, basalt fibre, carbon fibre or synthetic fibre, e.g. polymer or polypropene fibre or glass fibre. For example basalt fibre is not sensitive to salt stress, whereby the solvent used in the hardenable mixture may contain one or more salts.

The pH of the hardenable mixture, particularly when it is present as a mixture with a solvent, may be e.g. 0 - 14. The pH may depend e.g. on the raw material and/or composition of the binder composition. If the binder composition or the hardenable mixture contains a separate alkaline activator, the hardenable mixture may have a relatively high pH. The pH of the hardenable mixture may be for example higher than 11 or 12. However, in embodiments where no additional activator is added, the pH of the hardenable mixture may be lower. The pH of the hardenable mixture may be for example a pH of at most 11, or at most 10, or at most 9, or at most 8, or 6 - 11, or 6 - 9. The pH of the hardenable mixture may be one of the pH values mentioned herein in the initial stage of hardening of the hardenable mixture. In embodiments where the binder composition is itself basic to some extent, such as binder compositions comprising e.g. ash, fly ash, coal bottom ash, the raw material of the binder composition may as such raise the pH of the hardenable mixture. In these embodiments the pH of the hardenable mixture may be for example at most 13.

In one embodiment the binder composition or the hardenable mixture does not comprise an additional activator. The term "additional activator" may be understood as referring to a component or an agent which is added in addition to the raw material or raw materials and optionally a secondary raw material or secondary raw materials of the binder composition, the aggregate and/or the solvent, for the purpose of activating the binder composition, for example by raising the pH of the hardenable mixture, so as to activate the reactions causing the mixture to harden. It is also possible that the activator affects the reactivity of the reactants through the ions it contains.

This type of additional activator may, at least in some embodiments, be understood as meaning an alkaline activator. Examples of alkaline activators may be lye, hydroxides, e.g. sodium hydroxide (NaOH), potassium hydroxide (KOH), lithium hydroxide (LiOH), or all of their mixtures and combinations. The alkaline activator may comprise or be an aqueous hydroxide solution.

The additional activator may, at least in some embodiments, be understood as meaning sodium sulphate (Na₂SO4), sodium carbonate (Na₂CO₃), potassium sulphate (K₂SO4), potassium carbonate (K₂CO₃), or all of their mixtures or combinations.

Particle diameters of the particles and their distribution may be measured for example by means of laser diffraction, such as by a Coulter LS particle analyzer. In the laser diffraction method a group of particles is illuminated with monochromatic light. The particles scatter the light. The scattering and its nature may depend on the size and refractive index of the particles. Particle size distribution may be calculated based on the detected scattering pattern.

The description also relates to a method for manufacturing the hardenable mixture according to one or more embodiments described in this disclosure. The method may comprise mixing the binder composition according to one or more embodiments described in this disclosure with an aggregate and optionally a solvent.

The aggregate and the solvent may be any aggregate or solvent described in this disclosure.

In one embodiment, no additional activator is added to the hardenable mixture before hardening the hardenable mixture.

In one embodiment, an alkaline activator added, such as alkaline silicate activator and/or alkaline hydroxide activator, is not added to the hardenable mixture before hardening the hardenable mixture. In the context of the method or methods described herein the additional activator/activator may be any activator described in this disclosure.

The pH of the hardenable mixture may be any pH described in this disclosure.

The description also relates to a hardened material or product formed by hardening the hardenable mixture according to one or more embodiments described in this disclosure.

The description also relates to a method for manufacturing the hardened material or product according to one or more embodiments described in this disclosure. The method may comprise manufacturing the hardenable mixture according to one or more embodiments of the hardenable mixture or method described in this disclosure, forming the material or product into a desired shape and allowing the material or product to harden.

Hardening may be allowed to proceed at a suitable temperature. Depending e.g. on the exact composition of the binder composition and/or the hardenable mixture, the temperature may be equally high or higher than room temperature, or even lower. The temperature may nevertheless be higher than room temperature. Such a temperature and/or heating of the hardenable mixture and/or material or product may accelerate the hardening. The hardenable mixture may be heated e.g. to above 40 °C to accelerate the hardening.

Hardening may be allowed to proceed for a desired period of time. Typically, concrete mixtures or concrete-type hardenable mixtures continue to harden for a long time, even after full compression strength has been reached. The desired period of time may be e.g. at least 28 days. However, hardening of the hardenable mixture or product cast in a mould may be allowed to proceed for a shorter time before removing it from the mould, such that the hardening of the mixture or material may continue after it has been removed from the mould.

The description also relates to a material or product obtainable by a method according to one or more embodiments described in this disclosure.

The methods described above may be used to manufacture a voltage source applying the principle illustrated in Fig. 1, in which the electrolyte is solid material formed by allowing aluminium and silicon oxides to react with each other, so that following this reaction the electrolyte hardens to a solid form. Because of the solid state of the electrolyte, this type of voltage source has a remarkable structural strength, due to which it is possible to be used as a part of built environment.

If the first terminal 101 and the second terminal 102 illustrated schematically in Fig. 1 are different materials, the resulting voltage source is a so-called voltaic cell, and it is arranged to operate at least as a primary battery. The voltage that appears between terminals 101 and 102 depends on the position of the terminal materials in the electropotential series of metals. In the research relating to the invention, for example aluminium was tested as the material for the first terminal 101 and graphite chalk for the second terminal 102. In this type of voltage source the second terminal 102 is about 1.5 volts more positive than the first terminal 101.

In the research relating to the invention it was observed that a voltage source in which the terminals are different materials can be charged by connecting the terminals to a current source with a voltage higher than the spontaneous voltage electrochemically appearing between the terminals. In the research relating to the invention, two voltage sources were charged, both with the first terminal 101 made of aluminium. The second terminal 102 was either graphite chalk or steel. With a charging voltage of 30 volts the value of charging current was initially about 1 ampere, but decreased within a few minutes so as to settle to a level of slightly below 0.5 ampere. Charging was continued for some minutes, after which the charging current source was removed, and voltage between the terminals of the voltage source was measured. Directly after charging the voltage was about 2.5 volts, and even after 12 hours it was about 2 volts.

If the first terminal 101 and the second terminal 102 illustrated schematically in Fig. 1 are the same material, there will be no electrochemically spontaneous voltage between the terminals. However, in this case the voltage source may be arranged to operate as a secondary, i.e. rechargeable, battery. In the research relating to the invention, a voltage source with both terminals made of aluminium was charged at a voltage of 30 volts. The measurement results for the charging were comparable to the above-described results relating to voltage sources as a primary battery.

Fig. 2, 3 and 4 illustrate some small prototypes manufactured for the purposes of the research relating to the invention. In Fig. 2 the voltage source is generally shaped as a cylinder, and an electrolyte 103 is located inside an aluminium tube operating as a first terminal 101. A rod-shaped graphite chalk operating as a second terminal 102 is concentrically positioned in the aluminium tube, such that the assembly is axially symmetrical relative to axis 201. The outer diameter of the aluminium tube is about 25mm, its wall thickness is about 2mm and its length is about 30mm. The thickness of the graphite chalk is about 8mm. The prototype shown in Fig. 3 differs from that shown in Fig. 2 in terms of its length only. Measurements for the voltage sources illustrated in Fig. 2 and 3 were compared, and it was found that the voltage appearing between terminals 101 and 102 does not depend on the size, but only on the materials of the voltage source. In the embodiment shown in Fig. 4 an electrolyte 103 was placed in a cup made from electrically insulating paperboard, and graphite chalks as described above were used as terminals 101 and 102.

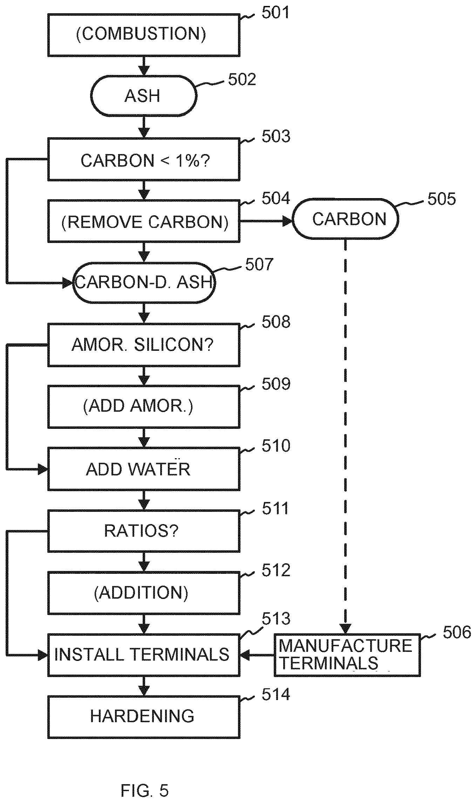

Fig. 5 illustrates some steps of a method that may be used for manufacturing the voltage source described above. A preparatory step 501 includes combustion of waste or other energy source in a power plant or an incineration plant so as to obtain ash 502. In step 503 the carbon content of ash is detected. If it is higher than about 1 percent by weight, in step 504 the carbon content of ash is reduced by a chemical, electrical and/or specific-weight-based method, so that the carbon content of the ash is decreased to a value of no more than one percent by weight of the ash. Removed carbon 505 may be recovered and it may be used for manufacturing the terminals as represented by step 506.

In step 510, water is added to carbondepleted ash 507. It should be noted that the removal of carbon (step 504) can be performed before or after adding water, depending on the method used for removing the carbon. Before this, the proportion of amorphous silicon may be analyzed in step 508, and if it is detected to be too low, the proportion of amorphous silicon may be increased or an additional activator may be added to ash in step 509.

In the research relating to the invention it was observed that in order to provide the hardening reaction and to provide the hardened solid electrolyte with a compression strength that is as high as possible, the ratio between aluminium and silicon contents in the electrolyte should preferably be about one to three, expressed as molar concentration. For this purpose, in the method illustrated in Fig. 5 the ratio of aluminium to silicon in the electrolyte may be analyzed in step 511. If it is detected to be far from the optimum, the method may include step 512 of adding silicon oxide and/or aluminium oxide obtained from another source to the electrolyte. By such addition of silicon and/or aluminium oxide, the ratio between aluminium and silicon contents in said electrolyte is transferred closer to one to three, expressed as molar concentration. Steps 511 and 512, if applied, may also be carried out before adding water in step 510, for example while analyzing the proportion of amorphous silicon in step 508.

Step 513 represents installation of the terminals in their place in the electrolyte. Installation of the terminals as such may already be carried out much before this, for example so that the terminals are disposed in their place in the mould in which the electrolyte will be cast after mixing with water (step 510). Fig. 5 also includes step 514 in which the electrolyte hardens and reaches the required structural strength.

In terms of the hardening reaction, water has no other purpose than to start the reaction. When the hardening reaction has started, water may be removed from the electrolyte, if necessary, for example by evaporating. If needed, the evaporation of water may be accelerated by heating, for example by subjecting the electrolyte to infrared or microwave radiation, or even by conducting electrical current through the electrolyte, as it is electrically conductive to some degree.

As to electrical connections, the voltage sources described above may be used as any voltage source, i.e. they may be connected in parallel and series in various configurations so as to achieve desired current delivery capacity and output voltage.

One special characteristic of ash recovered from a power plant or an incineration plant compared to most other materials is its low price. As ash has commonly been considered waste, the price may even be negative, which means that the operator of a power plant or an incineration plant may be willing to pay other parties for receiving the ash while committing to take care of it according to waste treatment regulations. The part of the terminals in the total structure of the voltage source is small, and if necessary, they may be manufactured from the carbon separated from ash in order to reduce the carbon content in the ash to a sufficiently low level for providing the hardening reaction.

Due to the low raw material costs of the voltage source, the voltage source may be built very large and/or they can be manufactured in very large quantities at a very affordable price. This affordability compensates for the fact that the voltage source does not match the traditional rechargeable and single-use batteries in terms of performance. It is even possible to build the voltage source so large that it also becomes a part of built environment. Built environment refers to the ensemble of all artificially created, fixed, physical structures for improving people's standard of living, comfort and operating conditions.

The parts of built environment that the voltage source as described above may form include for example buildings, parts of buildings, furniture, fences, railings, barriers, towers, terraces, bridges, roads and environmental art. The voltage source may be or it may be formed for example into an element. The element may be for example a building element, such as a wall element, a hollow-core slab element, a façade element, a column element or a beam element; or an infrastructure element, such as a road or a street construction element, a bridge element, a railing element, a retaining wall element, an edge beam, a tunnel element, a railroad tie, a pier element, an agricultural element or a foundation element. The voltage source may also be or it may be formed for example into a balcony, a road structure, a base, a mine protection barrier, a foundation, a noise wall, a post, a container, a yard slab, or a cable trough.

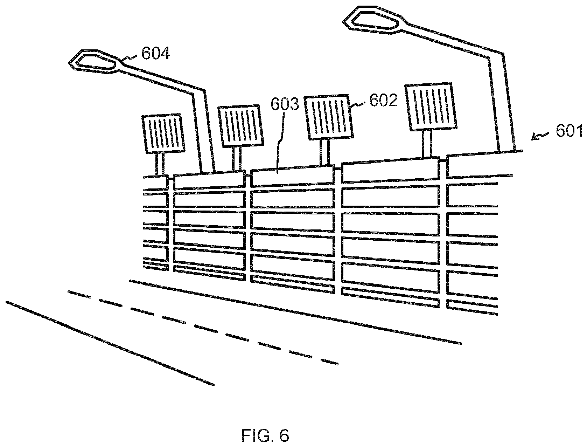

The invention can be used to build for example a noise barrier 601 as shown in Fig. 6, with solar panels 602 attached to it in order to generate an electric current for charging the noise barrier itself; the noise barrier's own physical structure may thus function as a solar panel battery, when the voltage sources as described above are used as components in it. As illustrated in Fig. 6, these components may be for example horizontal elements 603 with embedded terminals connected to each other and to a suitable charge and discharge control circuit to provide desired electrical properties. The terminals and the control circuit as such are not illustrated in Fig. 6. Electrical energy stored in the noise barrier may be conducted, during a dark season, for example to lights 604 that illuminate the same drive way that is separated from a residential area by the noise barrier 601.

The above-described embodiments of the invention are not limiting in terms of the scope of protection of the following claims; instead their basic idea may be modified in many ways without departing from the scope of protection of the claims.

## Claims

1. A voltage source including two electrically conductive terminals (101, 102) with an electrolyte (103) between them, wherein said electrolyte (103) is a mixture in which the main components in percent by weight are aluminium and silicon oxides, **characterized in that** said terminals (101, 102) are the same material, whereby the voltage source is arranged to operate as a secondary, i.e. rechargeable, battery.

2. The voltage source according to claim 1, **characterized in that** said electrolyte (103) is solid material formed by allowing aluminium and silicon oxides to react with each other, so that following this reaction the electrolyte hardens to a solid form.

3. The voltage source according to any preceding claim, **characterized in that** it forms at least one of the following: a building, a part of a building, furniture, a fence, a railing, a barrier, a tower, a terrace, a bridge, a road, environmental art, a wall element, a hollow-core slab element, a façade element, a column element, a beam element, a road or a street construction element, a bridge element, a railing element, a retaining wall element, an edge beam, a tunnel element, a railroad tie, a pier element, an agricultural element, a foundation element, a balcony, a road structure, a base, a mine protection barrier, a foundation, a noise wall, a post, a container, a yard slab, a cable trough.

4. A method for manufacturing a voltage source, **characterized in that** an electrolyte is formed between two terminals by using aluminium and silicon oxides as main components in percent by weight and mixing water (510) with said aluminium and silicon oxides.

5. The method according to claim 4, **characterized in that** seawater is mixed with said aluminium and silicon oxides.

6. The method according to any of claims 4 or 5, **characterized in that** at least one of the following is added (509) to said electrolyte: amorphous silicon, additional activator.

## Patentansprüche

1. Spannungsquelle mit zwei elektrisch leitenden Anschlüssen (101, 102), zwischen denen sich ein Elektrolyt (103) befindet, wobei der Elektrolyt (103) ein Gemisch ist, in dem die Hauptbestandteile in Gewichtsprozent Aluminium- und Siliziumoxide sind, **dadurch gekennzeichnet, dass** die Anschlüsse (101, 102) aus demselben Material bestehen, wobei die Spannungsquelle so angeordnet ist, dass sie als Sekundärbatterie, d.h. wiederaufladbare Batterie, arbeitet.

2. Spannungsquelle nach Anspruch 1, **dadurch gekennzeichnet, dass** der Elektrolyt (103) ein festes Material ist, das gebildet wird, indem man Aluminium- und Siliziumoxide miteinander reagieren lässt, so dass der Elektrolyt nach dieser Reaktion zu einer festen Form aushärtet.

3. Spannungsquelle nach einem der vorhergehenden Ansprüche, **dadurch gekennzeichnet, dass** sie mindestens eines der folgenden Elemente bildet: ein Gebäude, einen Gebäudeteil, ein Möbel, einen Zaun, ein Geländer, eine Barriere, einen Turm, eine Terrasse, eine Brücke, eine Straße, Umweltkunst, ein Wandelement, ein Hohlkörperplattenelement, ein Fassadenelement, ein Säulenelement, ein Balkenelement, ein Weg- oder Straßenbauelement, ein Brückenelement, ein Schienenelement, ein Stützmauerelement, ein Randbalken, ein Tunnelelement, ein Eisenbahnschwellenelement, ein Pfeilerelement, ein landwirtschaftliches Element, ein Fundamentelement, ein Balkon, ein Straßenbauwerk, ein Sockel, eine Minenschutzwand, ein Fundament, eine Lärmschutzwand, ein Pfosten, ein Container, eine Hofplatte, ein Kabeltrog.

4. Verfahren zur Herstellung einer Spannungsquelle, **dadurch gekennzeichnet, dass** ein Elektrolyt zwischen zwei Anschlüssen gebildet wird, indem Aluminium- und Siliziumoxide als Hauptkomponenten in Gewichtsprozent verwendet werden und Wasser (510) mit den Aluminium- und Siliziumoxiden gemischt wird.

5. Verfahren nach Anspruch 4, **dadurch gekennzeichnet, dass** Meerwasser mit den Aluminium- und Siliziumoxiden gemischt wird.

6. Verfahren nach einem der Ansprüche 4 oder 5, **dadurch gekennzeichnet, dass** dem Elektrolyten mindestens eines der folgenden Elemente zugesetzt wird (509): amorphes Silizium, zusätzlicher Aktivator.

## Revendications

1. Source de tension comportant deux bornes électroconductrices (101, 102) avec un électrolyte (103) entre elles, dans laquelle ledit électrolyte (103) est un mélange dans lequel les composants principaux en pourcentage en poids sont des oxydes d'aluminium et de silicium, **caractérisée en ce que** lesdites bornes (101, 102) sont le même matériau, selon quoi la source de tension est conçue pour fonctionner en tant que batterie secondaire, c'est-à-dire rechargeable.

2. Source de tension selon la revendication 1, **caractérisée en ce que** ledit électrolyte (103) est un matériau solide formé en permettant aux oxydes d'aluminium et de silicium de réagir les uns avec les autres, de telle sorte que, à la suite de cette réaction, l'électrolyte durcit en une forme solide.

3. Source de tension selon une quelconque revendication précédente, **caractérisée en ce qu'**elle forme au moins un des éléments suivants : un bâtiment, une partie d'un bâtiment, du mobilier, une clôture, une balustrade, une barrière, une tour, une terrasse, un pont, une route, de l'art environnemental, un élément de mur, un élément de dalle à cœur creux, un élément de façade, un élément de colonne, un élément de poutre, un élément de construction de route ou de rue, un élément de pont, un élément de balustrade, un élément de mur de retenue, une poutre de rive, un élément de tunnel, une traverse de chemin de fer, un élément de jetée, un élément agricole, un élément de fondation, un balcon, une structure de route, une base, une barrière de protection minière, une fondation, un mur de protection contre le bruit, un poteau, un conteneur, une dalle de jardin, un chemin de câbles.

4. Procédé de fabrication d'une source de tension, **caractérisé en ce qu'**un électrolyte est formé entre deux bornes en utilisant des oxydes d'aluminium et de silicium en tant que composants principaux en pourcentage en poids et en mélangeant de l'eau (510) avec lesdits oxydes d'aluminium et de silicium.

5. Procédé selon la revendication 4, **caractérisé en ce que** de l'eau de mer est mélangée avec lesdits oxydes d'aluminium et de silicium.

6. Procédé selon l'une quelconque des revendications 4 ou 5, **caractérisé en ce qu'**au moins un des éléments suivants est ajouté (509) audit électrolyte : silicium amorphe, activateur supplémentaire.
